(19)

Europäisches
Patentamt
European
Patent Office
Office européen
des brevets

(11) **EP 2 746 942 A1**

(12) **EUROPEAN PATENT APPLICATION**
published in accordance with Art. 153(4) EPC

(43) Date of publication:
**25.06.2014 Bulletin 2014/26**

(21) Application number: **12823546.2**

(22) Date of filing: **15.08.2012**

(51) Int Cl.:
***G06F 9/50*** *(2006.01)*

(86) International application number:
**PCT/JP2012/005163**

(87) International publication number:
**WO 2013/024597 (21.02.2013 Gazette 2013/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.08.2011 JP 2011177753
08.11.2011 JP 2011244517**

(71) Applicant: **NEC Corporation
Tokyo 108-8001 (JP)**

(72) Inventor: **TAMANO, Hiroshi
Tokyo 108-8001 (JP)**

(74) Representative: **Betten & Resch
Theatinerstrasse 8
80333 München (DE)**

(54) **DISTRIBUTED PROCESSING MANAGEMENT DEVICE AND DISTRIBUTED PROCESSING MANAGEMENT METHOD**

(57)    Provided is a device of managing distributed processing, including: a selecting unit that estimates a total execution time on the basis of each of distributed-execution patterns indicating a grouping mode for plural computers and corresponding to the number of computers that are in charge of each of processes having different parameters in plural phases, this total execution time being necessary for the plural computers to execute the plural processes in a distributed manner, thereby selecting a distributed-execution pattern that makes the total execution time minimal, from among the distributed-execution patterns.

FIG. 2

**Description**

TECHNICAL FIELD

The present invention relates to a technique of managing distributed processing in a distributed processing environment where plural computers in a cluster implement, in a distributed manner, plural processes having different parameters in plural phases.

BACKGROUND ART

In recent years, with the expansion of the Internet and the increase in the capacity of storage units, a large volume of data has been generated and accumulated day by day. To process such a large volume of data, distributed processing systems have been increasingly used. MapReduce is well known as a distributed processing system or distributed processing technique. With MapReduce, developers can create applications that operate in a parallel and distributed manner only by designing Map functions and Reduce functions without writing any distribution-related programs. Currently, MapReduce is used for processing large-scale data in various companies.

The important applications of MapReduce include, for example, machine learning or data mining. With the technique of machine learning or data mining, it is possible to extract valuable information from among the large amount of information. For example, it is possible to learn patterns of illegal transactions from transaction data in banks, or offer recommendations by learning preferences of users on the basis of the purchase history. A research paper "Map-Reduce for Machine Learning on Multicore" by Cheng-tao et al. describes that various kinds of machine learning algorithms can be expressed by using a Map function and a Reduce function. This leads to implementations of various kinds of machine learning algorithms with MapReduce (for example, Apache Mahout).

The large number of algorithms for machine learning has parameters (hyperparameters) set in advance. The accuracy of learning differs depending on the set parameters, and hence, in practice, it is important to obtain appropriate parameters. However, in order to obtain the appropriate parameters, it is necessary to perform learning processing a large number of times and make evaluations while varying parameter values, which leads to a problem of requiring a long period of time.

Non-Patent Document 1 proposes a technique for solving the problem as described below. This technique reduces a time required for repeating a machine learning program described in MapReduce while varying hyperparameter values. In this technique, overlapping portions in the machine learning program are shared. For example, in the case where a job A and a job B are described in MapReduce and are different only in parameters thereof, and where the job B is executed after the job A is executed, both of the job A and the job B have the same input, and hence, it is pointless for each of the job A and the job B to separately read the same data. Thus, the overlapping processes of reading the data by the job A and the job B are shared. In this sharing, after reading of the data is completed, the job A is executed, and then, the job B is executed. This makes it possible to eliminate the need to redundantly read the data multiple times, whereby it is possible to reduce the execution time.

Further, Patent Document 1 described below proposes a technique related to a calculation system in a parallel execution environment, in which analyses are distributed to processing devices so that the entire processing time is minimum. With this technique, in the case where a large number of analyses, the details of which are different according to parameter values, are executed in plural processing devices using a specific application, the execution time required for each of the analyses is estimated on the basis of the values of parameters that characterize the details of the analyses, and each of the analyses is distributed to a processing device on the basis of the estimation.

RELATED DOCUMENT

PATENT DOCUMENT

Patent Document 1: Japanese Patent Application Laid-open No. H11-259433

NON-PATENT DOCUMENT

Non-Patent Document 1: Yoshifumi Fukumoto, Makoto Onizuka, "Optimization for Multiple Analysis Jobs on MapReduce," DEIM Forum 2011 C3-4

SUMMARY OF THE INVENTION

With the technique proposed in Patent Document 1 above, it is possible to determine which processing device executes each of the analyses. However, it does not take it into consideration that these analyses themselves are performed in a distributed manner.

Further, the technique proposed in Non-Patent Document 1 described above relates to a technique of improving efficiency in a mode in which each of MapReduce processes, which have different parameters, is executed in all the machines (all the computers) existing in a cluster. Thus, this technique does not take into consideration a mode in which each of the MapReduce processes is performed in part of the machines in the cluster. For example, in the case where 40 MapReduce processes with different parameters are executed in a cluster formed by 20 machines, the technique described in Non-Patent Document 1 provides a method of regarding all the machines (20 machines) as one group, and efficiently executing the 40 processes in the 20 machines.

However, there are various execution modes other than that described above. For example, there are a mode in which the cluster is divided into two groups each formed by 10 machines, and 20 processes are executed in each of the groups, and a mode in which the cluster is divided into four groups each formed by five machines, and 10 processes are executed in each of the groups. In the distributed processing environment realized, for example, by MapReduce, the execution time differs according to execution patterns.

The present invention has been made in view of the circumstances described above, and provides a technique of managing distributed processing in a distributed processing environment where plural computers in a cluster execute plural processes with different parameters in plural phases, which reduces the total execution time required for the plural processes.

In order to solve the problems described above, each aspect of the present invention employs the following configurations.

The first aspect relates to a device of managing distributed processing. The device of managing distributed processing according to the first aspect includes a selecting unit that estimates a total execution time on the basis of each of distributed-execution patterns indicating a grouping mode for plural computers and corresponding to the number of computers that are in charge of each of processes having different parameters in plural phases, this total execution time being necessary for the plural computers to execute the plural processes in a distributed manner, thereby selecting a distributed-execution pattern that makes the total execution time minimal, from among the distributed-execution patterns.

The second aspect relates to a method of managing distributed processing. The method of managing distributed processing according to the second aspect is performed by a computer and includes estimating a total execution time on the basis of each of distributed-execution patterns indicating a grouping mode for plural computers and corresponding to the number of computers that are in charge of each of processes having different parameters in plural phases, this total execution time being necessary for the plural computers to execute the plural processes in a distributed manner, thereby selecting a distributed-execution pattern that makes the total execution time minimal, from among the distributed-execution patterns.

It should be noted that another aspect according to the present invention may include a computer program that causes a computer to realize each of the configurations according to the first aspect described above, and a computer-readable storage medium that stores such a program. This storage medium includes a non-transitory tangible medium.

According to each of the aspects described above, it is possible to provide a technique of managing distributed processing in a distributed processing environment where plural computers in a cluster execute, in a distributed manner, plural processes with different parameters in plural phases, which reduces the total execution time required for the plural processes.


BRIEF DESCRIPTION OF THE DRAWINGS

The above-described object and other objects of the present invention, and features and advantages of the present invention will be made further clear by the preferred embodiment described below and the following drawings attached thereto.

FIG. 1 is a schematic view illustrating an example of a configuration of a distributed processing system according to a first exemplary embodiment.
FIG. 2 is a schematic view illustrating an example of a configuration of a master device according to the first exemplary embodiment.
FIG. 3 is a diagram illustrating an example of a relation between a distributed-execution pattern and workload of each machine.
FIG. 4 is a diagram illustrating a relation between the number of machines per group and processing time for User Map in the case where data are read from a disk.
FIG. 5A is a diagram illustrating a relation between the number of machines per group and processing time for User Map in the case where all data to be read are read from either a memory or a disk according to the data size ($P_{MD}$

> $P_{CD}$).

FIG. 5B is a diagram illustrating a relation between the number of machines per group and processing time for User Map in the case where all data to be read are read from either a memory or a disk according to the data size ($P_{MD}$ < $P_{CD}$).

FIG. 6 is a diagram illustrating a relation between the number of machines per group and processing time for User Reduce.

FIG. 7 is a diagram illustrating a relation between the number of machines per group and processing time for User Setup.

FIG. 8 is a diagram illustrating a relation between the number of machines per group and the total execution time.

FIG. 9 is a flowchart showing an example of operations performed by the distributed processing system according to the first exemplary embodiment.

FIG. 10 is a schematic view illustrating an example of a configuration of a master device according to a second exemplary embodiment.

FIG. 11 is a flowchart showing an example of operations performed by a distributed processing system according to the second exemplary embodiment.

## DESCRIPTION OF EMBODIMENTS

Hereinbelow, exemplary embodiments according to the present invention will be described. Note that the exemplary embodiments described below are merely examples, and the present invention is not limited to the configurations of the exemplary embodiments below.

A device of managing distributed processing according to this exemplary embodiment includes a selecting unit that estimates a total execution time on the basis of each of distributed-execution patterns indicating a grouping mode for plural computers and corresponding to the number of computers that are in charge of each of processes having different parameters in plural phases, this total execution time being necessary for the plural computers to execute the plural processes in a distributed manner, thereby selecting a distributed-execution pattern that makes the total execution time minimal, from among the distributed-execution patterns.

As described above, in a distributed processing environment where plural computers in a cluster execute, in a distributed manner, plural processes with different parameters in plural phases, there are plural execution modes for the plural processes. Each of the execution modes as described above is referred to as a distributed-execution pattern. Thus, each of the distributed-execution patterns indicates a grouping mode for the plural computers, and corresponds to the number of computers that are in charge of each of the processes. In this exemplary embodiment, a distributed-execution pattern that makes the total execution time for the plural processes minimal is selected from among plural distributed-execution patterns.

As described above, according to this exemplary embodiment, when plural processes having different parameters are executed, it is possible to always select the pattern with which the minimum execution time can be obtained, from among plural distributed-execution patterns. Thus, according to this exemplary embodiment, it is possible to reduce the total execution time for the plural processes by executing, in the distributed manner, the plural processes using the distributed-execution pattern selected as described above.

Below, the above-described exemplary embodiment will be described in more detail. Each detailed exemplary embodiment described below is an example in which the configuration of the device of managing distributed processing described above is applied to a distributed processing system realized with MapReduce. Thus, the plural processes executed in the distributed processing system in the exemplary embodiment in a distributed manner are realized by a distributed program written using MapReduce, and are formed by a Setup phase, a Map phase, and a Reduce phase.

In the Map phase, a Map process is executed, in which input data are read, a predetermined process is applied to the read input data, and data obtained through the predetermined process are transferred to the following Reduce phase. The predetermined process applied in the Map phase includes, for example, a process of decomposing the input data. In the Reduce phase, a Reduce process in which the data decomposed in the Map phase are subjected to a predetermined process is executed. In the Setup phase, a Setup process is executed, in which an initialization process or other processes for the following Map phase and Reduce phase is applied.

In the exemplary embodiments described below, no limitation is applied, for example, to the details of the plural processes realized by MapReduce, or details of the input data. Further, in the exemplary embodiments described below, MapReduce is given as an example of the distributed processing technique. However, there is no limitation on the distributed processing technique, provided that such a technique can realize the distributed processing environment where plural computers in a cluster execute, in a distributed manner, plural processes with different parameters in plural phases.

[First Exemplary Embodiment]

[System Configuration]

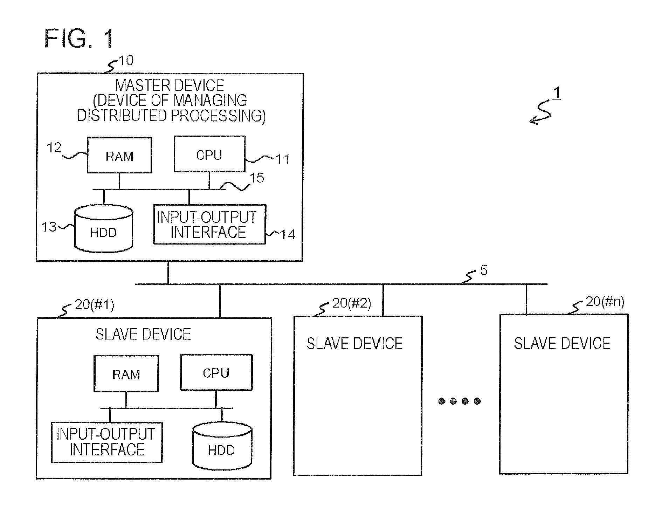

FIG. 1 is a schematic view illustrating an example of a configuration of a distributed processing system 1 according to a first exemplary embodiment. The distributed processing system 1 according to the first exemplary embodiment includes a master device 10, and plural slave devices 20 (#1, #2, ···, #n). The above-described device of managing distributed processing is realized on the master device 10. Thus, the master device 10 may be also referred to as a device of managing distributed processing. Since each of the slave devices 20 (#1, #2, ···, #n) is only necessary to have the same function, they are collectively referred to as slave devices 20 except when they need to be separately treated.

The master device 10 and each of the slave devices 20 have hardware configurations each including, for example, a memory such as a random access memory (RAM) 12, a read only memory (ROM, not illustrated), and a hard disk drive (HDD) 13, a central processing unit (CPU) 11, and an input-output interface 14. These hardware elements are connected to each other, for example, through a bus 15. The input-output interface 14 includes a network interface that enables the master device 10 and the slave device 20 to communicate with each other through a communication network 5 in a predetermined communication method. In other words, the master device 10 and the slave device 20 are general computers.

In the example illustrated in FIG. 1, the master device 10 and the slave device 20 each have one CPU 11. However, they may each have plural CPUs 11. This exemplary embodiment does not limit the hardware configurations of each of the master device 10 and the slave device 20. Further, although, in this exemplary embodiment, the master device 10 and the slave device 20 are separately treated in order to distinguish the device that manages the distributed processing from other devices, it may be possible that they are not treated separately.

[Device Configuration]

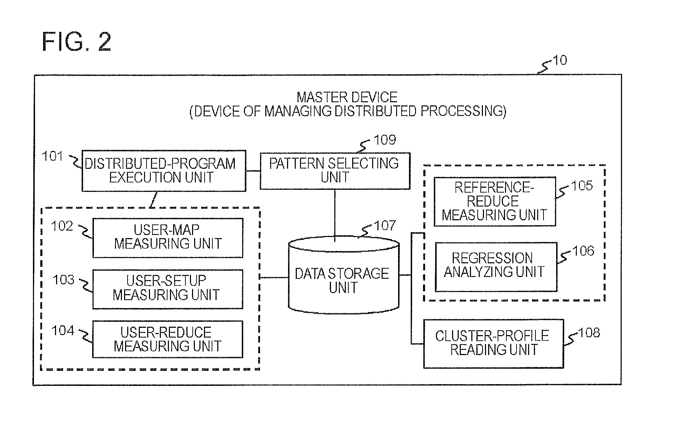

FIG. 2 is a schematic view illustrating an example of a configuration of the master device 10 according to the first exemplary embodiment. As illustrated in FIG. 2, the master device 10 includes, for example, a distributed-program execution unit 101, a User-Map measuring unit 102, a User-Setup measuring unit 103, a User-Reduce measuring unit 104, a Reference-Reduce measuring unit 105, a regression analyzing unit 106, a data storage unit 107, a cluster-profile reading unit 108, and a pattern selecting unit 109. The master device 10 realizes each of the processing units illustrated in FIG. 2, for example, with the CPU 11 running a program stored in the memory. Such a program is installed from a portable storage medium such as a compact disc (CD) and a memory card, or other computers on the network through the input-output I/F 14, and is stored in the memory.

The distributed-program execution unit 101 receives information on a distributed program that realizes plural processes serving as the target and having different parameters, causes the pattern selecting unit 109 to select a distributed-execution pattern that makes the total execution time for the distribution program minimal, and causes the distributed processing system 1 to execute the distributed program on the basis of the selected distributed-execution pattern. Hereinafter, the distributed-program execution unit 101 is also referred to as an execution unit 101. Further, the execution unit 101 corresponds to the distributed-processing execution unit according to the present invention.

In the distributed processing system 1 (cluster), the master device 10 and the slave device 20 are the computers that can actually execute the distributed program. However, in the following descriptions, for the purpose of explanation, the slave device 20 is the only computer that can actually execute the distributed program.

Each of the distributed-execution patterns indicates one grouping mode for the plural slave devices 20 in the distributed processing system 1 (cluster), and corresponds to the number of the slave devices 20 that are in charge of each of the processes. The execution unit 101 assigns a parameter to each of the groups identified on the basis of the distributed-execution pattern selected by the pattern selecting unit 109, and requests each of the slave devices 20 to execute the distributed program assigned to the corresponding group.

The User-Map measuring unit 102, the User-Setup measuring unit 103, and the User-Reduce measuring unit 104 measure information necessary for the pattern selecting unit 109 to select the distributed-execution pattern, and store the results of the measurement in the data storage unit 107. The User-Map measuring unit 102, the User-Setup measuring unit 103, and the User-Reduce measuring unit 104 may execute the measurement process in accordance with the instruction from the execution unit 101, or may execute the measurement process at a given time. The User-Map measuring unit 102, the User-Setup measuring unit 103, and the User-Reduce measuring unit 104 correspond to a Map-phase measuring unit, a Setup-phase measuring unit, and a Reduce-phase measuring unit in the present invention.

The User-Map measuring unit 102 causes the slave device 20 (and the master device 10) to actually execute the Map process, thereby measuring a calculation time ($t_M$) for the Map process and storing the measured calculation time in the data storage unit 107. Hereinafter, this Map process is referred to as a User Map in order to distinguish it from a reference process, which will be described later. Details of the calculation time $t_M$ for the User Map measured here will be described later.

The User-Setup measuring unit 103 causes the slave device 20 (and the master device 10) to actually execute one of the Setup processes, thereby measuring a processing time ($t_S$) for the Setup process per process and storing the measured processing time in the data storage unit 107. Hereinafter, this Setup process is also referred to as a User Setup, in order to distinguish it from the reference process, which will be described later.

The User-Reduce measuring unit 104 causes one of the Reduce processes to be actually executed with a certain specific distributed-execution pattern, thereby measuring a processing time ($t_R$) for the Reduce process per process with the certain specific distributed-execution pattern, and storing the measured processing time in the data storage unit 107. The certain specific distributed-execution pattern represents at least one of the plural distributed-execution patterns that the distributed processing system 1 can take, and is used for calculating a processing time ($t_{Ra}$) for a Reference Reduce, which will be described later. Hereinafter, this Reduce process is also referred to as a User Reduce, in order to distinguish it from the reference process, which will be described later.

The Reference-Reduce measuring unit 105 measures information necessary for building an estimation model used for estimating a processing time for the reference process serving as a reference for the Reduce process. The reference process represents a dedicated process for building the estimation model, and is executed using a built-in operator such as a Sum function for obtaining the total value and a Max function for obtaining the maximum value. Hereinafter, this reference process is also referred to as a Reference Reduce.

For example, the Reference-Reduce measuring unit 105 actually executes a Reference Reduce while varying the data size processed in the Reference Reduce and the number of machines that execute the Reference Reduce, and measures the processing time for this Reference Reduce. More specifically, the data size is varied, for example, to 512 kB (kilobytes), 1 MB (megabyte), 2 MB, and 4 MB. Further, the number of machines is varied, for example, to 3, 5, 10, 15, and 20. In order to increase the accuracy of the estimation model, it is desirable for the data size and the number of machines used in the Reference-Reduce measuring unit 105 to be set to values close to the number of machines that actually execute the distributed program or the data size that are treated there. Finally, the Reference-Reduce measuring unit 105 acquires plural combinations of the number of machines, the data size, and the processing time, and provides the regression analyzing unit 106 with information on the plural combinations.

The regression analyzing unit 106 retains, in advance, an estimation model expression for estimating a processing time for a single Reference Reduce. This estimation model expression may be an expression with the amount of calculation obtained on the basis of an implementation algorithm of the Reduce process, or may be a general polynomial expression in which this implementation algorithm is a black box. This exemplary embodiment does not limit this estimation model expression itself, provided that the processing time can be obtained with this expression using the data size and the number of machines. For example, the following polynomial expression may be used as the estimation model expression, where p is the number of machines, and n is the data size.

```
a1 + a2*p + a3*n + a4*p*n = f(p, n)       Equation 1
```

Upon receiving the information provided from the Reference-Reduce measuring unit 105, the regression analyzing unit 106 uses the information to perform a regression analysis, thereby determining coefficients in the estimation model expression and storing the determined coefficients in the data storage unit 107. For the regression analysis method, the least square method or other known method may be used. In the case of the estimation model expression of Equation 1 described above, the regression analyzing unit 106 employs the least square method to calculate the coefficients a1, a2, a3, and a4.

The Reference-Reduce measuring unit 105 and the regression analyzing unit 106 may execute their processes with the instruction from the execution unit 101, or may execute them at a given time.

The cluster-profile reading unit 108 reads a cluster profile having information on a cluster described therein, and stores the read information in the data storage unit 107. The cluster-profile reading unit 108 reads, for example, the number of machines M, the memory size Mem per machine, the disk bandwidth W and other information in the cluster (distributed processing system 1). In this exemplary embodiment, the number of machines M in the cluster corresponds to the number of the slave devices 20 that actually execute the distributed program. The memory size Mem is a size of the RAM (hereinafter, simply referred to as a memory) called, for example, a primary storage and a main storage. The disk bandwidth W is a frequency bandwidth of the input-output interface of an auxiliary storage (hereinafter, referred to as a disk) such as a hard disk and a flash memory, which store data read in the Map process as input data.

The data storage unit 107 stores various data that the pattern selecting unit 109 uses for estimating the total execution time for the target distributed processes. More specifically, the data storage unit 107 stores, for example, the calculation time $t_M$ for the User Map, the processing time $t_S$ for User Setup, the processing time $t_R$ for User Reduce, the coefficients of the estimation model expression, the number of machines M in the cluster, the memory size Mem per machine, and the disk bandwidth W. The data storage unit 107 is realized, for example, as an associative array, a KeyValue store, or a relational database (RDB).

The pattern selecting unit 109 estimates a total execution time necessary to execute, in a distributed manner, plural processes having different parameters and serving as the target of the distributed processing system 1 on the basis of various kinds of information acquired from the execution unit 101 and the data storage unit 107, and selects a distributed-execution pattern that makes the estimated total execution time minimal. The pattern selecting unit 109 transmits information on the selected distributed-execution pattern to the execution unit 101. Note that the total execution time estimated by the pattern selecting unit 109 may also be referred to as a total execution time for distributed program. The pattern selecting unit 109 corresponds to the selecting unit according to the present invention.

The pattern selecting unit 109 estimates the total execution time for each of the distributed-execution patterns, for example, using Equation 2 given below. The pattern selecting unit 109 calculates p that makes the value (total execution time) of Equation 2 below minimal. In Equation 2 below, p represents the number of machines per group, and hence, it can be said that p is information for identifying the distributed-execution pattern.

In Equation 2 below, D represents the data size read in the Map process, C represents the number of the target processes, and n represents the data size treated in the Reduce process. The other symbols, described above, are now restated: W represents the disk bandwidth, M represents the number of machines in the cluster, $f(p, n)$ represents the estimation model expression, $t_R$ represents the processing time for User Reduce per process, $t_S$ represents the processing time for User Setup per process, and $t_M$ represents the calculation time for User Map. The calculation time for the User Map means a time required for only executing the User Map, and does not include the time for reading the data.

[Formula 1]

$$\frac{D}{p \cdot W} + \frac{C \cdot p}{M} \cdot \left\{ \frac{t_R}{t_{Ra}} \cdot f(p,n) + t_S \right\} \quad if\ p < \min(P_{MD}, P_{CD})$$

$$t_M + \frac{C \cdot p}{M} \cdot \left\{ \frac{t_R}{t_{Ra}} \cdot f(p,n) + t_S \right\} \quad if\ p \geq \min(P_{MD}, P_{CD})$$

Equation 2

D, C, and n are acquired by the execution unit 101 as information on the distributed program to be executed, and are transferred to the pattern selecting unit 109. W, M, $f(p, n)$, $t_R$, $t_S$, and $t_M$ are acquired from the data storage unit 107.

$t_{Ra}$ represents the processing time for the Reference Reduce per process. The pattern selecting unit 109 calculates $t_{Ra}$ by substituting the number of machines per group corresponding to the specific distributed-execution pattern used by the User-Reduce measuring unit 104, into p in the acquired estimation model expression $f(p, n)$.

The pattern selecting unit 109 calculates $P_{CD}$ and $P_{MD}$ using Equation 3 and Equation 4 below. Note that the meanings of the $P_{CD}$ and the $P_{MD}$ will be described later. The $\min(P_{MD}, P_{CD})$ in Equation 2 above represents the smaller value of the $P_{MD}$ and the $P_{CD}$.

$$P_{CD} = D/(W*t_M) \quad \text{Equation 3}$$

$$P_{MD} \text{ is the minimum p that satisfies } (D/p) < Mem$$

Equation 4

Below, the principle of the method of estimating the total execution time as given by Equation 2 above will be described. The total execution time for the plural target processes (the distributed program) can be obtained from the total sum of the processing times for the phases (User Setup, User Map, User Reduce) constituting the distributed program. Thus, each of the processing times for the phases will be discussed.

First, the processing time for the User Map will be described.

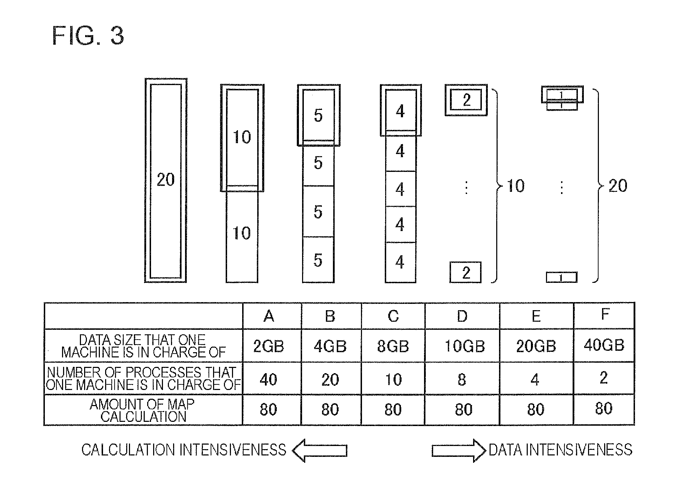

FIG. 3 is a diagram illustrating an example of a relation between the distributed-execution patterns and workloads of each of the machines. The example illustrated in FIG. 3 shows a case where the number of machines M in the cluster is 20, the number of processes C is 40, and the size D of data is 40 GB. In this case, as illustrated in FIG. 3, there are six distributed-execution patterns.

In the distributed-execution pattern A, 20 machines are treated as one group, and 40 processes are executed by one group formed by 20 machines. In the distributed-execution pattern B, 20 machines are divided into two groups each formed by 10 machines, and 20 processes are executed by 10 machines in each of the groups. In the distributed-execution pattern C, 20 machines are divided into four groups each formed by five machines, and 10 processes are executed by five machines in each of the groups. In the distributed-execution pattern D, 20 machines are divided into five groups each formed by four machines, and eight processes are executed by four machines in each of the groups. In the distributed-execution pattern E, 20 machines are divided into 10 groups each formed by two machines, and four processes are executed by two machines in each of the groups. In the distributed-execution pattern F, 20 machines are divided into 20 groups, and two processes are executed by one machine. Each of the processes is subjected to parallel distributed processing by all the machines in the group, and hence, the number of processes that one machine is in charge of corresponds to the number of processes that one group is in charge of. This refers to the "number of processes that one machine is in charge of" stated in FIG. 3.

Each of the distributed-execution patterns described above can also be expressed in the following manner. That is, one process is executed by 20 machines in the distributed-execution pattern A; one process is executed by 10 machines in the distributed-execution pattern B; one process is executed by five machines in the distributed-execution pattern C; one process is executed by four machines in the distributed-execution pattern D; one process is executed by two machines in the distributed-execution pattern E; and one process is executed by one machine in the distributed-execution pattern F.

On the other hand, in the example illustrated in FIG. 3, the data size read in the User Map is 40 GB for each process. Thus, one process is executed by 20 machines in the distributed-execution pattern A, and hence, the data size read by one machine is 2 GB. Similarly, one process is executed by 10 machines in the distributed-execution pattern B, and hence, the data size read by one machine is 4 GB. This refers to the "data size that one machine is in charge of " stated in FIG. 3.

As described above, with the decrease in the number of machines in the group (in the direction from left to right in FIG. 3), the amount of data read by each machine increases, and the number of processes that each machine is in charge of decreases. Further, the product of the amount of data read and the number of processes is constant, regardless of the distributed-execution pattern, and hence, the amount of calculation necessary for the User Map does not vary, regardless of the distributed-execution pattern. However, even if this amount of calculation is constant, the number of calculations per item of data decreases with the decrease in the number of machines in the group (in the direction from left to right in FIG. 3).

The processing time for the User Map will be discussed below by taking these properties into consideration. Here, it is assumed that data for all the distributed-execution patterns are read from a disk, and the data are read in the background of the process (calculation) of the User Map. In this case, a bottleneck occurs in calculation, since the number of calculations per item of data is large in the distributed-execution pattern having the large number of the machines in the group (for example, A and B). Thus, the processing time for the User Map is expressed only within the calculation time for the User Map. On the other hand, in the distributed-execution pattern having the small number of machines in the group (for example, E and F), the number of calculations per item of data is small, and hence, calculation finishes faster, which leads to a situation where the next data are awaited to be read. Thus, reading the data forms the bottleneck. In this case, the processing time for the User Map can be expressed only within the time required for reading the data. Whether a certain distributed-execution pattern has a bottleneck caused by calculation or a bottleneck caused by reading of the data is determined on the basis of which amount of time is greater: the time required for reading one item of data or the time required for calculating one item of data. The certain distributed-execution pattern has the bottleneck caused by reading of the data if the time required for reading one item of data is greater, while it has the bottleneck caused by calculation if the time required for calculating one item of data is greater.

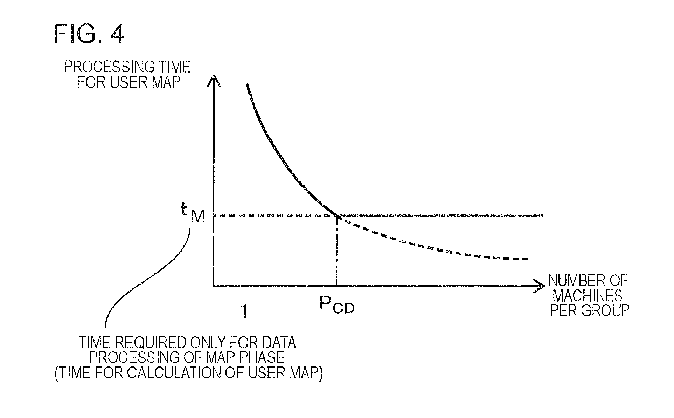

FIG. 4 is a diagram illustrating a relation between the number of machines per group and the processing time for the User Map in the case where data are read from a disk. In FIG. 4, $P_{CD}$ represents the number of machines per group, which serves as a boundary between a distributed-execution pattern in which calculation is the bottleneck and a distributed-execution pattern in which reading data is the bottleneck. In this case, the processing time for the User Map is constant ($t_M$) in the region where the number of machines per group is greater than $P_{CD}$, in other words, in the region of the distributed-execution pattern in which calculation is the bottleneck. This is because, as described above, the amount of calculation necessary for the User Map is constant regardless of the distributed-execution pattern. On the other hand, in the region where the number of machines per group is smaller than $P_{CD}$, in other words, in the region of the distributed-execution pattern where reading data is the bottleneck, the processing time for the User Map increases according to the data size read.

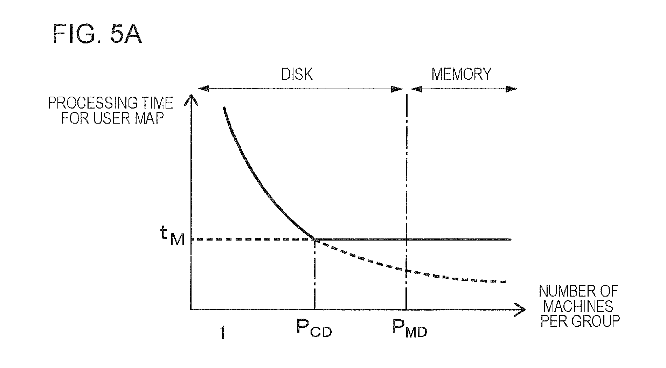

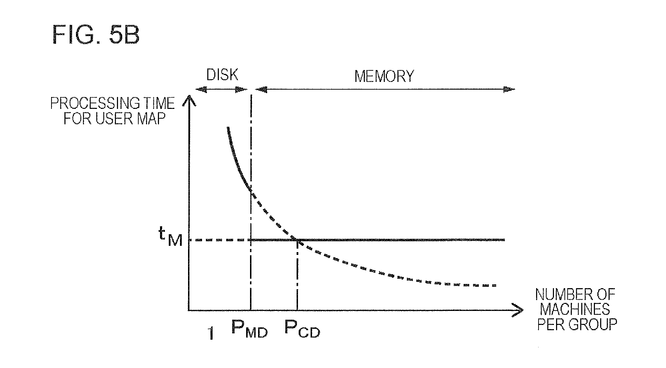

FIG. 5A and FIG. 5B are diagrams each illustrating a relation between the number of machines per group and the processing time for the User Map in the case where all data to be read are read from either one of the memory and the disk in accordance with the data size. For example, in the case where the memory size of each of the machines is 8 GB, all the data read in each of the machines in the distributed-execution patterns A, B, and C illustrated in FIG. 3 can be stored in the memory. On the other hand, not all the data read in each of the machines in the distributed-execution patterns D, E, and F illustrated in FIG. 3 can be stored in the memory, and hence, all the data are read from the disk.

Thus, in the case where the memory size of each of the machines is taken into consideration as described above, there are two types of relations between the number of machines per group and the processing time for the User Map, depending on the memory size of each of the machines, as illustrated in FIG. 5A and FIG. 5B. Here, $P_{MD}$ represents the number of machines per group, which serves as the boundary by which it is judged whether all the data to be read are stored in each of the machines. FIG. 5A illustrates a case where $P_{MD}$ is greater than $P_{CD}$, while FIG. 5B illustrates a case where $P_{MD}$ is smaller than $P_{CD}$.

In the case of FIG. 5A, in other words, in the case where $P_{MD}$ is greater than $P_{CD}$, the graph has a shape similar to that shown in FIG. 4. This is because, in the case where the number of machines p per group is greater than $P_{CD}$, calculation creates the bottleneck regardless of whether the data are stored in the memory or disk.

On the other hand, in the case of FIG. 5B, in other words, in the case where $P_{MD}$ is smaller than $P_{CD}$, the graph has a shape different from that shown in FIG. 4. In the range where the number of machines p per group is smaller than $P_{CD}$ but greater than $P_{MD}$, the processing time for the User Map is equal to the calculation time $t_M$ for the User Map. This is because, although reading the data is the cause of the bottleneck in this range, calculation is the cause of the bottleneck if the data can be stored in the memory that gives quicker access than the disk. If the number of machines p per group is smaller than $P_{MD}$, not all the data can be stored in the memory, and hence, all the data need to be read from the disk, which makes reading the data act as the bottleneck.

As illustrated in FIG. 5A and FIG. 5B, in the case where the memory size of each of the machines is taken into consideration, and all data to be read are read from either one of the memory and the disk depending on the data size to be read, the processing time $T_M$ for the User Map can be estimated with Equation 5 given below. As expressed by Equation 5 below, the processing time $T_M$ for the User Map is equal to either one of the time required for reading the data per computer (equation on the upper side in Equation 5) and the calculation time $t_M$ for the User Map, according to the distributed-execution patterns.

[Formula 2]

$$T_M = \begin{cases} \dfrac{D}{p \cdot W} & if\ p < \min(P_{MD}, P_{CD}) \\[2ex] t_M & if\ p \geq \min(P_{MD}, P_{CD}) \end{cases} \qquad \text{Equation 5}$$

As described above, the calculation time ($t_M$) for the User Map is constant regardless of the distributed-execution patterns. This calculation time ($t_M$) for the User Map is measured by the User-Map measuring unit 102. Thus, the User-Map measuring unit 102 may acquire the calculation time ($t_M$) for the User Map by actually executing, for example, a single User Map (1 parameter) to measure the User-Map calculation time per process, and multiplying this measured User-Map calculation time per process by the number of processes. Alternatively, the User-Map measuring unit 102 may execute the actual plural processes of the User Map.

Next, the processing time for the User Reduce will be described.

Unlike the User Map, the User Reduce can take various kinds of implementation modes. For example, it may be possible to employ an implementation mode in which data are collected to one machine, and Reduce computation is performed with this one machine, or an implementation mode in which a tree is created with machines in a cluster, and Reduce computation is performed with the entire cluster. This leads to various forms of estimation equations in terms of the processing time for the User Reduce, depending on implementation modes.

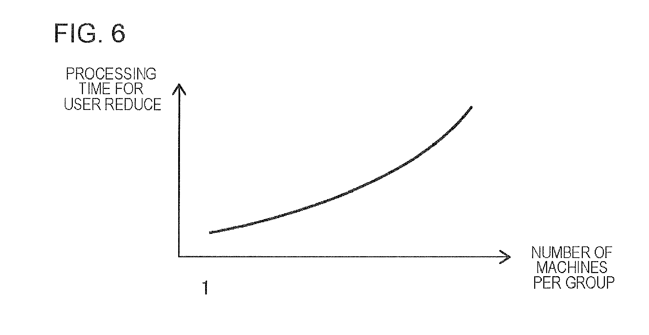

However, in any form of the implementation modes, the processing time for the User Reduce generally results in the same as that shown in FIG. 6. FIG. 6 is a diagram illustrating a relation between the number of machines per group and the processing time for the User Reduce. In this exemplary embodiment, an estimation model expression for estimating a processing time for a single Reference Reduce is acquired through a regression analysis, and this estimation model expression is corrected on the basis of a ratio between the processing time for the User Reduce corresponding to a certain common distributed-execution pattern and the processing time for the Reference Reduce, thereby estimating the processing time for the User Reduce per process corresponding to each of the distributed-execution patterns. In this case, the processing time $T_R$ for the User Reduce can be estimated by multiplying the processing time for the User Reduce per process corresponding to each of the distributed-execution patterns by the number of processes per computer corresponding to each of the distributed-execution patterns as expressed by Equation 6 below.

[Formula 3]

$$T_R = \frac{C \cdot p}{M} \cdot \frac{t_R}{t_{Ra}} \cdot f(p,n)$$

Equation 6

In Equation 6 above, $f(p, n)$ is an estimation model expression for estimating the processing time for the single Reference Reduce, and $t_R/t_{Ra}$ is a ratio between the processing time for the User Reduce corresponding to a certain common distributed-execution pattern and the processing time for the Reference Reduce. Thus, $(t_R/t_{Ra})*f(p, n)$ corresponds to the processing time for the User Reduce per process corresponding to each of the distributed-execution patterns.

Finally, the processing time for the User Setup will be described. The User Setup is a phase set, for example, for initialization prior to execution of MapReduce as described above.

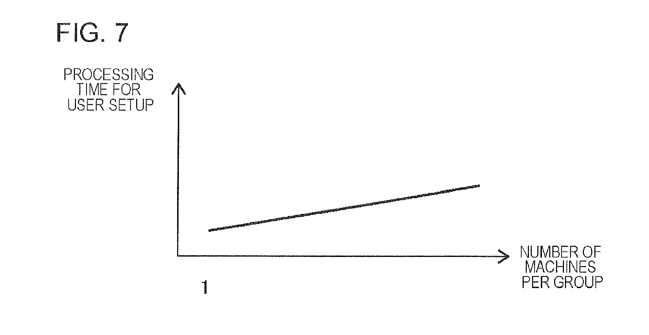

FIG. 7 is a diagram illustrating a relation between the number of machines per group and the processing time for the User Setup. As illustrated in FIG. 7, the User Setup takes a processing time $t_S$ in accordance with the number of processes. Thus, the processing time for the User Setup $T_S$ can be estimated through Equation 7 below.

[Formula 4]

$$T_S = \frac{C \cdot p}{M} \cdot t_S$$

Equation 7

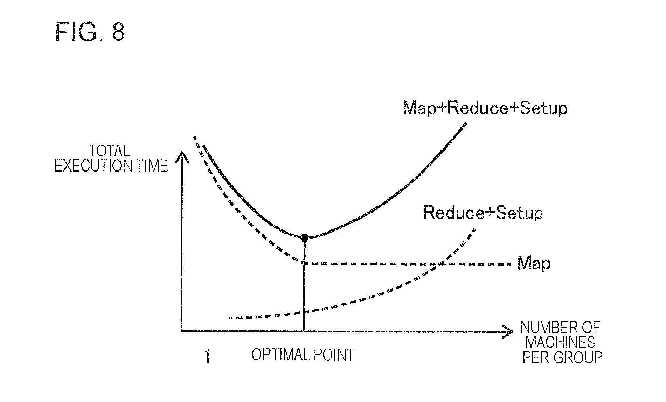

Above-described Equation 2, as illustrated in FIG. 8, can be obtained by adding up the processing times $T_M$, $T_R$ and $T_S$ for each of the phases as estimated above. FIG. 8 is a diagram illustrating a relation between the number of machines per group and the total execution time. Note that it is only necessary to obtain the minimum values for the two equations in Equation 2 described above, and finally acquire p for obtaining the smaller value of them. However, in the lower equation in Equation 2 above, p that takes the minimum value is min $\{P_{MD}, P_{CD}\}$. This is because the processing time for the User Map is constant, and each of the processing times for the User Reduce and the User Setup decreases with the decrease in the number of machines p per group. Thus, the upper equation in Equation 2 above is the equation for which actual calculation is necessary. For example, in the case where Equation 1 is selected for $f(n, p)$, the upper equation in Equation 2 above becomes a cubic equation related to "p" by differentiating and organizing this equation. In this case, for the upper equation in Equation 2 above, it may be possible to make an analytical calculation, for example, through a formula of Cardano.

The slave device 20 executes a distributed program in accordance with the instruction from the execution unit 101 of the master device 10. The instruction from the execution unit 101 includes information on how many programs are to be executed and which parameters are used in this execution, in association with the distributed-execution pattern selected by the pattern selecting unit 109. Note that, as described above, the master device 10 may also be in charge of executing such a distributed program.

[Example of Operation]

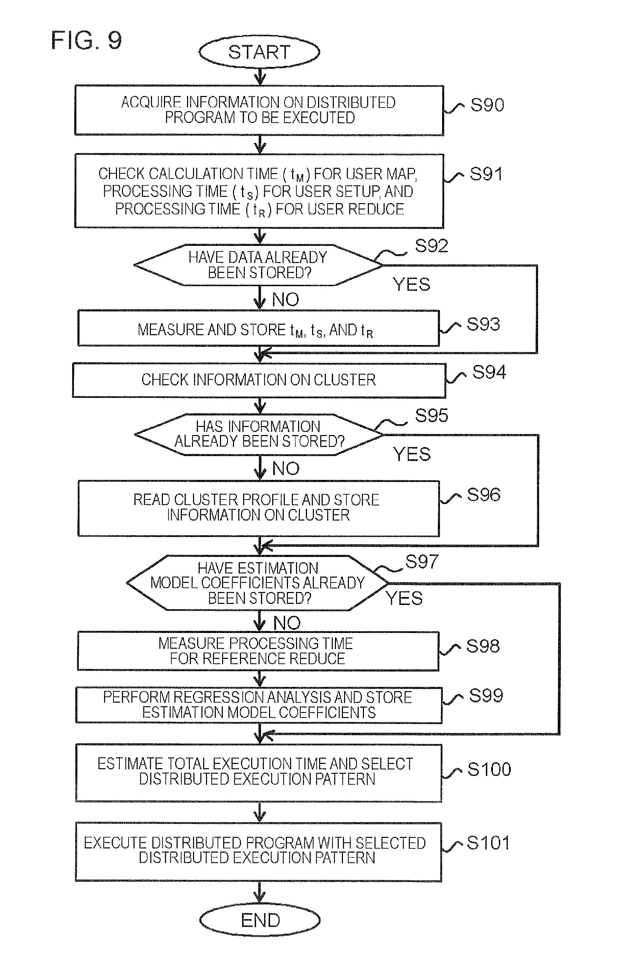

Next, an example of operations performed by the distributed processing system 1 according to the first exemplary embodiment will be described with reference to FIG. 9. FIG. 9 is a flowchart showing an example of operations performed by the distributed processing system 1 according to the first exemplary embodiment.

Once a process is started, the execution unit 101 of the master device 10 first acquires information on a distributed program to be executed (S90). The start of the process is triggered, for example, by the execution unit 101 receiving a distributed processing request transmitted, for example, from an external device connected to the master device 10 through the communication network 5. This exemplary embodiment does not limit the trigger for the start of the process.

The received information on the distributed program includes, for example, a name of the program, a parameter list for executing the program with different parameters, a name of an input file, the data size D of the input file, and the data size n to be processed by the program in the Reduce phase. The execution unit 101 acquires, as the number of processes C, the number of the parameters contained in the parameter list. Such information may be received together with the distributed processing request, or may be received from another processing unit separately from the distributed processing request, or may be maintained by the execution unit 101 in advance.

Next, the execution unit 101 checks whether the calculation time ($t_M$) for the User Map, the processing time ($t_S$) for the User Setup, and the processing time ($t_R$) for the User Reduce, each of which corresponds to this distributed program, are stored in the data storage unit 107 (S91).

If the data storage unit 107 does not store these data (S92; NO), the execution unit 101 gives instructions to the User-Map measuring unit 102, the User-Setup measuring unit 103, and the User-Reduce measuring unit 104 to measure these data. In response to these instructions, the User-Map measuring unit 102, the User-Setup measuring unit 103, and the User-Reduce measuring unit 104 actually execute the User Map, the User Setup, and the User Reduce, thereby measuring the calculation time ($t_M$) for the User Map, the processing time ($t_S$) for the User Setup, and the processing time ($t_R$) for the User Reduce, and the measured $t_M$, ts, and $t_R$ are stored in the data storage unit 107 (S93).

Then, the execution unit 101 checks whether information on the cluster is stored in the data storage unit 107 (S94). If the information on the cluster is not stored (S95; NO), the execution unit 101 gives an instruction for the cluster-profile reading unit 108 to read.

In response to this instruction, the cluster-profile reading unit 108 reads the cluster profile, and stores the read information in the data storage unit 107 (S96). Here, the number of machines M in the cluster (distributed processing system 1), the memory size Mem per machine, the disk bandwidth W, and the other information are read, and stored in the data storage unit 107.

Next, the execution unit 101 checks whether the data storage unit 107 has already stored the estimation model coefficient (S97). If the estimation model coefficient is not yet stored (S97; NO), the execution unit 101 gives an instruction for the Reference-Reduce measuring unit 105 to make measurements.

In response to this instruction, the Reference-Reduce measuring unit 105 actually executes the Reference Reduce while the data size processed in the Reference Reduce and the number of machines that execute the Reference Reduce are being varied, and measures the processing times for the Reference Reduce (S98). The Reference-Reduce measuring unit 105 provides the regression analyzing unit 106 with plural combinations of the number of machines, the data size, and the processing times acquired through the measurements.

The regression analyzing unit 106 performs the regression analysis using combined data provided by the Reference-Reduce measuring unit 105 and determines coefficients for the estimation model expression through the analysis, and stores the determined coefficients in the data storage unit 107 (S99). The estimation model expression is a regression expression for estimating a processing time for a single Reference Reduce, and is retained in the regression analyzing unit 106 in advance.

Then, the execution unit 101 activates the pattern selecting unit 109, and provides the pattern selecting unit 109 with the data size D of the input data, the data size n of the Reduce process, and the number of processes C acquired in process S90.

The pattern selecting unit 109 extracts various kinds of information necessary for estimating the total execution time from the data storage unit 107. More specifically, the pattern selecting unit 109 acquires, as information on the cluster, the disk bandwidth W, the number of machines M in the cluster, and the memory size Mem per machine. Further, the pattern selecting unit 109 acquires the calculation time $t_M$ for the User Map, the processing time $t_S$ for the User Setup per process, the processing time $t_R$ for the User Reduce per process, the estimation model expression f(p, n), and the estimation model coefficient. In the case where the estimation model expression f(p, n) is expressed as Equation 1 above, the estimation model coefficients a1, a2, a3, and a4 are acquired.

Then, the pattern selecting unit 109 uses the acquired information to estimate the total execution time for the distributed program to be executed, and selects a distributed-execution pattern that makes the estimated total execution time minimal (S100). The estimation of the total execution time is made, for example, using Equation 2 above. The pattern selecting unit 109 transfers information for identifying the selected distributed-execution pattern, to the execution unit 101. In the case of the example using Equation 2 above, the number of machines p per group is transferred to the execution unit 101.

The execution unit 101 uses information with which the acquired distributed-execution pattern can be identified, to group the plural slave devices 20 in the distributed processing system 1. The execution unit 101 sorts parameters into groups on the basis of the parameter list acquired in process S90, and makes an execution request to each of the slave devices 20 belonging to each of the groups together with the sorted parameters. At this time, the execution unit 101 may transfer, for example, the name of the program, and the name of the input file acquired in process S90.

Upon receiving this request, each of the slave devices 20 executes the designated program with the designated parameter (S101).

In the example of operation in the example illustrated in FIG. 9, the measurements by the User-Map measuring unit 102, the User-Setup measuring unit 103, and the User-Reduce measuring unit 104 (S93), the acquisition of the information on the cluster by the cluster-profile reading unit 108 (S96), and the acquisition of the estimation model expression by the Reference-Reduce measuring unit 105 and the regression analyzing unit 106 (S98 and S99) are sequentially executed. However, these processes may be executed in parallel prior to process S90. Further, the example has been given in which the check whether the necessary data are stored in the data storage unit 107 is made by the execution unit 101. However, this check may be made by the pattern selecting unit 109.

[Operation and Effect of First Exemplary Embodiment]

In the first exemplary embodiment, a distributed-execution pattern that provides the minimum total execution time for distributed program that realize plural processes having different parameters is selected, and the distributed program are executed on the basis of the selected distributed-execution pattern. Thus, according to the first exemplary embodiment, it is possible to reduce the total execution time for the distributed program to be executed.

In the first exemplary embodiment, the total execution time for the distributed program is estimated by using an estimation expression for the total execution time for the distributed program based on the distributed-execution pattern (for example, the number of machines p per group), which is acquired by adding up the processing times ($T_M$, $T_S$, $T_R$) required in each of the phases (Map, Setup, Reduce) constituting the distributed program. Thus, by using the estimation expression for the processing time in accordance with the characteristics of implementation modes of each of the phases, it is possible to estimate the total execution time for the distributed program in an accurate manner, whereby it is possible to select the optimum distributed-execution pattern.

For the processing time $T_M$ required for the Map phase, the region where calculation is the cause of the bottleneck and the region where reading the data is the cause of the bottleneck are taken into consideration, and further, the location where the data are stored (disk or memory) is taken into consideration. With these configurations, any one of the time required for reading the data per computer ($D/(p *\times W)$) corresponding to each of the distributed-execution patterns and the time ($t_M$) required by the User Map to process data (time required merely for data processing and not including the time for reading the data) is estimated as the processing time for the Map phase included in the total execution time.

For the Reduce phase, the estimation model expression for estimating the processing time for the single Reference Reduce is acquired by using the Reference Reduce, the estimation model expression is corrected with the ratio between the processing time for the User Reduce per process and the processing time for the single Reference Reduce corresponding to the common single distributed-execution pattern, thereby estimating the processing time $T_R$ for the User Reduce corresponding to each of the distributed-execution patterns. Further, the estimation model expression is acquired through a regression analysis using the combination data of the actually measured processing time for the Reference Reduce, the amount of data processed, and the number of machines.

For the Setup phase, the actual value of the processing time for the User Setup per process is acquired, and this actual value is multiplied by the number of processes per computer corresponding to each of the distributed-execution patterns, thereby estimating the processing time $T_S$ for User Setup.

With this configuration, according to this exemplary embodiment, it is possible to accurately estimate the total time for the distributed program in accordance with the implementation modes of each of the phases of the distributed program. Therefore, according to this exemplary embodiment, it is possible to select an optimum distributed-execution pattern that makes the total execution time for the distributed program minimal.

[Second Exemplary Embodiment]

Below, a distributed processing system 1 according to a second exemplary embodiment will be described with focus being placed on things different from the first exemplary embodiment, and explanation of the details same as those described in the first exemplary embodiment will not be repeated.

[Device Configuration]

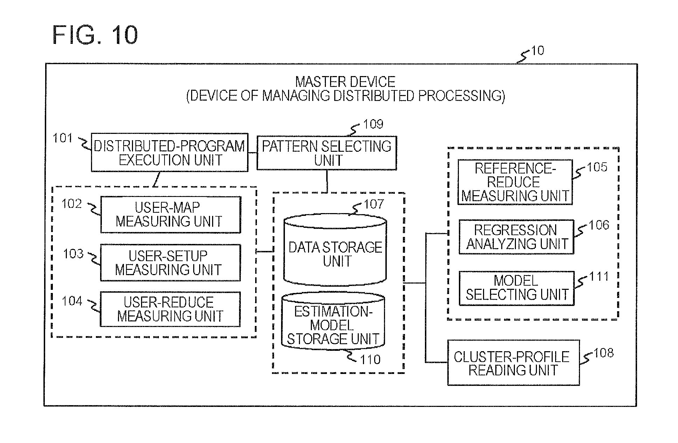

FIG. 10 is a schematic view illustrating an example of a configuration of a master device 10 according to the second exemplary embodiment. As illustrated in FIG. 10, the master device 10 according to the second exemplary embodiment further includes an estimation-model storage unit 110 and a model selecting unit 111 in addition to the configuration of the first exemplary embodiment. Each of these processing units is realized with the CPU 11 running a program stored, for example, in the memory.

In the first exemplary embodiment, the example has been given in which the regression analyzing unit 106 retains a single estimation model expression. In the second exemplary embodiment, the estimation-model storage unit 110 stores plural estimation model expressions for estimating a processing time of a single Reference Reduce. The method of building the estimation model expressions has already been described in the first exemplary embodiment. In the case where general polynomial expressions are used for the estimation model expressions, the estimation-model storage unit 110 stores the plural estimation model expressions as given below.

$$a1 + a2*p + a3*n = f1(p, n) \quad \text{Equation 8-1}$$

$$a1 + a2*p + a3*n + a4*p\char`\^2 = f2(p, n) \quad \text{Equation 8-2}$$

$$a1 + a2*p + a3*n + a4*n\char`\^2 = f3(p, n) \quad \text{Equation 8-3}$$

$$a1 + a2*p + a3*n + a4*n*p = f4(p, n) \quad \text{Equation 8-4}$$

The estimation-model storage unit 110 may store, in advance, these plural estimation model expressions, or may store plural estimation models acquired from other computers, or may store plural estimation models inputted from a user through a user interface.

The regression analyzing unit 106 applies a regression analysis to each of the plural estimation model expressions stored in the estimation-model storage unit 110, using data received from the Reference-Reduce measuring unit 105. Upon acquiring coefficients for each of the estimation model expressions, the regression analyzing unit 106 stores them in the estimation-model storage unit 110.

The model selecting unit 111 selects the best estimation model expression from among the plural estimation model expressions stored in the estimation-model storage unit 110, and stores information on the selected estimation model expression in the estimation-model storage unit 110. More specifically, the model selecting unit 111 calculates known information criterion such as Akaike's information criterion (AIC), Bayesian information criterion (BIC), and minimum description length (MDL) on the basis of results of the regression analysis applied to each of the estimation model expressions, thereby selecting the best estimation model expression.

When the total execution time is estimated, the pattern selecting unit 109 extracts the estimation model expression selected by the model selecting unit 111 from the estimation-model storage unit 110.

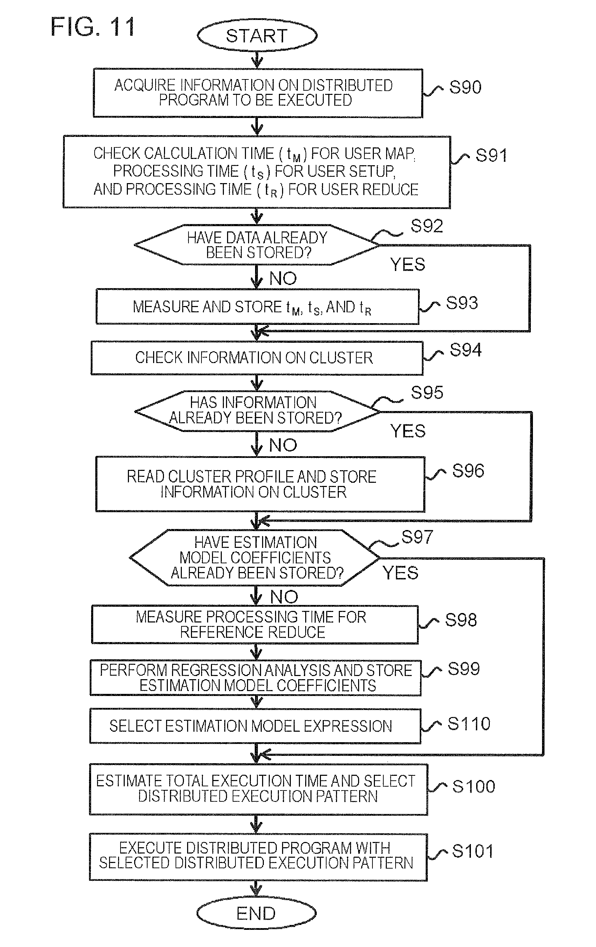

FIG. 11 is a flowchart showing an example of operations performed by the distributed processing system 1 according to the second exemplary embodiment. In the second exemplary embodiment, the regression analyzing unit 106 applies, in process S99, a regression analysis to each of the estimation model expressions stored in the estimation-model storage unit 110. Then, the model selecting unit 111 uses results of the regression analysis to calculate the information criterion, thereby selecting one estimation model expression from among plural estimation model expressions (S110). The pattern selecting unit 109 uses the estimation model expression selected by the model selecting unit 111 to estimate the total execution time for the distributed program (S100).

[Operation and Effect of Second Exemplary Embodiment]

As described above, in the second exemplary embodiment, the best estimation model expression is selected from plural candidates for the estimation model expression, and the processing time for the User Reduce corresponding to each of the distributed-execution patterns is estimated using the selected estimation model expression. Thus, according to the second exemplary embodiment, it is possible to further accurately estimate the processing time for the User Reduce, whereby it is possible to select the best distributed-execution pattern that makes the total execution time minimal.

[Modification Example]

It should be noted that, in the exemplary embodiments described above, the number of machines p per group is used as information for identifying the distributed-execution pattern, whereby p that makes the value of Equation 2 described above minimal is determined. However, the number of groups g may be used as the information for identifying the distributed-execution pattern. In this case, it is only necessary to use an expression in which p in Equation 2 described above is replaced with M/g, and determine g that makes the value of this expression minimal.

Further, in the exemplary embodiments described above, the estimation model expression for estimating the processing time for a single Reference Reduce is acquired through a regression analysis, and this estimation model expression is corrected with a ratio between the processing time for the User Reduce and the processing time for the Reference Reduce, whereby the processing time for the User Reduce is estimated. However, it may be possible to use a theoretical formula of the processing time for the User Reduce corresponding to implementation modes of the User Reduce to estimate the processing time for the User Reduce.

For example, it may be possible to retain, in advance, f(p, n) obtained from, for example, a data-communication time, communication latency, a CPU time necessary for a User Reduce, for each implementation mode of the User Reduce, and use this. In this case, Equation 9 described below may be used instead of Equation 2 described above. In this case, the User-Reduce measuring unit 104, the Reference-Reduce measuring unit 105, and the regression analyzing unit 106 are not necessary.

[Formula 5]

$$\frac{D}{p \cdot W} + \frac{C \cdot p}{M} \cdot \{f(p,n) + t_S\} \qquad if \ p < \min(P_{MD}, P_{CD})$$

$$t_M + \frac{C \cdot p}{M} \cdot \{f(p,n) + t_S\} \qquad if \ p \geq \min(P_{MD}, P_{CD})$$

Equation 9

Further, in the first exemplary embodiment and the second exemplary embodiment described above, the pattern selecting unit 109 estimates the total execution time on the basis of the total sum of the processing times for the following phases: the Map phase, the Reduce phase, and the Setup phase. However, in the Setup phase, only the initialization process is performed, and it may be possible that the processing time for this process has limited impact on this total execution time. In this case, it may be possible to employ a configuration in which the pattern selecting unit 109 only uses the processing time for the User Map and the processing time for the User Reduce to estimate this total execution time. Instead of Equation 2 described above, Equation 10 described below may be used. In this case, the User-Setup measuring unit 103 is not necessary.

[Formula 6]

$$\frac{D}{p \cdot W} + \frac{C \cdot p}{M} \cdot \frac{t_R}{t_{Ra}} \cdot f(p,n) \qquad if \ p < \min(P_{MD}, P_{CD})$$

$$t_M + \frac{C \cdot p}{M} \cdot \frac{t_R}{t_{Ra}} \cdot f(p,n) \qquad if \ p \geq \min(P_{MD}, P_{CD})$$

Equation 10

Further, in the first exemplary embodiment and the second exemplary embodiment described above, the pattern selecting unit 109 estimates the total execution time on the basis on the total sum of the processing times for the following phases: the Map phase, the Reduce phase, and the Setup phase. However, depending on the processes, there is a possibility that the processing time for each of the Setup phase and the Reduce phase is sufficiently shorter than the processing time for the Map phase. In this case, the pattern selecting unit 109 may only uses the processing time for the User Map to estimate this total execution time. By obtaining p, which satisfies the following expression, this p may be used instead of Equation 2 described above.

$$t_M = D/(p \cdot W)$$

In this case, the User-Reduce measuring unit 104, the Reference-Reduce measuring unit 105, and the regression analyzing unit 106 are not necessary.

Further, in the first exemplary embodiment and the second exemplary embodiment described above, each of the processing units in the master device 10 may be located on different computers. For example, the pattern selecting unit 109, the data storage unit 107, and the cluster-profile reading unit 108 may be realized on other computers other than the master device 10.

It should be noted that, in the plural flowcharts used for the descriptions above, plural steps (processes) are described in a sequential order. However, the orders of the process steps performed in these exemplary embodiments are not limited to the order of the steps described. In these exemplary embodiments, the order of the process steps illustrated in the drawings may be exchanged, provided that the exchange does not impair the details of the processes. The above-described exemplary embodiments and the modification examples may be combined, provided that the details thereof do not contradict each other.

Part or all of the exemplary embodiments and modification examples above can be described in a manner illustrated in the Supplementary Notes below. However, the exemplary embodiments and the modification examples are not limited to the descriptions below.

(Supplemental Note 1) A device of managing distributed processing, including:

a selecting unit that estimates a total execution time on the basis of each of distributed-execution patterns indicating a grouping mode for plural computers and corresponding to the number of computers that are in charge of each of processes having different parameters in plural phases, this total execution time being necessary for the plural computers to execute the plural processes in a distributed manner, thereby selecting a distributed-execution pattern that makes the total execution time minimal, from among the distributed-execution patterns.

(Supplemental Note 2) The device of managing distributed processing according to Supplemental Note 1, in which

the plural phases at least include:

a Map phase in which input data used for each of the processes is read, and data obtained by applying a predetermined process to the input data is transmitted to a later phase; and
a Reduce phase in which a predetermined process is applied to the data decomposed in the Map phase, and

the selecting unit estimates the total execution time by using an estimation expression that depends on each of the distributed-execution patterns and is obtained from an estimation expression for a processing time for the Map phase or is obtained by combining the estimation expression for the processing time for the Map phase and an estimation expression for a processing time for the Reduce phase.

(Supplemental Note 3) The device of managing distributed processing according to Supplemental Note 2, further including:

a Map-phase measuring unit that measures a calculation time for the Map phase by causing at least one of the plural computers to execute the Map phase, in which
the selecting unit acquires a time for reading data per computer corresponding to each of the distributed-execution patterns, and the calculation time for the Map phase measured by the Map-phase measuring unit, and uses any one of the acquired times as the processing time for the Map phase included in the total execution time.

(Supplemental Note 4) The device of managing distributed processing according to Supplemental Note 2 or 3, further including:

a Reduce-phase measuring unit that measures a processing time for the Reduce phase per process corresponding to a first distributed-execution pattern of the plural distributed-execution patterns by causing one of the plural processes to be executed with the first distributed-execution pattern, in which
the selecting unit:

acquires an estimation model expression for estimating, on the basis of an amount of data processed and each of the distributed-execution patterns, a processing time for a reference process serving as a reference for processing of the Reduce phase;
estimates, on the basis of this estimation model expression, the processing time for the reference process corresponding to the first distributed-execution pattern;
corrects this estimation model expression using a ratio between the processing time for the Reduce phase per process corresponding to the first distributed-execution pattern and the processing time for the reference process corresponding to the first distributed-execution pattern, thereby estimating the processing time for the Reduce phase per process corresponding to each of the distributed-execution patterns; and
estimates an execution time for the Reduce phase included in the total execution time using the estimated processing time for the Reduce phase.

(Supplemental Note 5) The device of managing distributed processing according to Supplemental Note 4, further including:

a reference-process measuring unit that measures an execution time for the reference process by actually executing the reference process while varying the number of computers in charge and an amount of data processed; and
a regression analyzing unit that estimates the estimation model expression by performing a regression analysis using plural combination data of the number of computers in charge, the amount of data processed, and the execution time for the reference process, each of which is acquired by the reference-process measuring unit.

(Supplemental Note 6) The device of managing distributed processing according to Supplemental Note 5, further including:

an estimation-model storage unit that stores plural estimation model expressions for estimating the processing time for the reference process; and
an estimation-model selecting unit that evaluates the plural estimation model expressions using an information criterion on the basis of a result of the regression analysis to each of the estimation model expressions by the regression analyzing unit, thereby selecting one estimation model expression from among the plural estimation model expressions, in which
the selecting unit acquires the estimation model expression selected by the estimation-model selecting unit.

(Supplemental Note 7) The device of managing distributed processing according to any one of Supplemental Notes 2 to 6, in which
the plural phases further include a Setup phase in which an initialization process for a later phase is performed,
the device of managing distributed processing further includes a Setup-phase measuring unit that measures a processing time for the Setup phase per process by causing at least one computer of the plural computers to execute one of the plural processes, and
the selecting unit:

acquires the number of processes per computer corresponding to each of the distributed-execution patterns;
multiplies the processing time for the Setup phase per process by the number of processes per computer to estimate an estimation expression for the processing time for the Setup phase; and
estimates the total execution time using an estimation expression that depends on each of the distributed-execution patterns and is obtained by further combining the estimation expression for the processing time for the Setup phase with the estimation expression for the processing time for the Map phase and the estimation expression for the processing time for the Reduce phase.

(Supplemental Note 8) The device of managing distributed processing according to any one of Supplemental Notes 1 to 7, further including
a distributed-processing execution unit that assigns a parameter to each group on the basis of the grouping mode indicated by the distributed-execution pattern selected by the selecting unit, and instructs each group to execute the plural processes in a distributed manner.
(Supplemental Note 9) A method of managing distributed processing, the method being performed by a computer and including:

estimating a total execution time on the basis of each of distributed-execution patterns indicating a grouping mode for plural computers and corresponding to the number of computers that are in charge of each of processes having different parameters in plural phases, this total execution time being necessary for the plural computers to execute the plural processes in a distributed manner, thereby selecting a distributed-execution pattern that makes the total execution time minimal, from among the distributed-execution patterns.

(Supplemental Note 10) The method of managing distributed processing according to Supplemental Note 9, in which
the plural phases at least include:

a Map phase in which input data used for each of the processes is read, and data obtained by applying a predetermined process to the input data is transmitted to a later phase, and
a Reduce phase in which a predetermined process is applied to the data decomposed in the Map phase, and
the selecting the distributed-execution pattern includes estimating the total execution time by using an estimation expression that depends on each of the distributed-execution patterns and is obtained from an estimation expression for a processing time for the Map phase or is obtained by combining the estimation expression for the processing time for the Map phase with an estimation expression for a processing time for the Reduce phase.

(Supplemental Note 11) The method of managing distributed processing according to Supplemental Note 10, in which
the method being performed by the computer further includes measuring a calculation time for the Map phase by causing at least one of the plural computers to execute the Map phase, and
the selecting the distributed-execution pattern includes:

acquiring a time for reading data per computer corresponding to each of the distributed-execution patterns, and the measured calculation time for the Map phase; and
using any one of the acquired times as the processing time for the Map phase included in the total execution time.

(Supplemental Note 12) The method of managing distributed processing according to Supplemental Note 10 or 11, the method being performed by the computer and further including:

measuring a processing time for the Reduce phase per process corresponding to a first distributed-execution pattern of the plural distributed-execution patterns by causing one of the plural processes to be executed with the first distributed-execution pattern, in which
the selecting the distributed-execution pattern includes:

acquiring an estimation model expression for estimating, on the basis of an amount of data processed and each of the distributed-execution patterns, a processing time for a reference process serving as a reference for processing of the Reduce phase;
estimating, on the basis of this estimation model expression, the processing time for the reference process corresponding to the first distributed-execution pattern;
correcting this estimation model expression using a ratio between the processing time for the Reduce phase per process corresponding to the first distributed-execution pattern and the processing time for the reference process corresponding to the first distributed-execution pattern, thereby estimating the processing time for the Reduce phase per process corresponding to each of the distributed-execution patterns; and
estimating an execution time for the Reduce phase included in the total execution time using the estimated processing time for the Reduce phase.

(Supplemental Note 13) The method of managing distributed processing according to Supplemental Note 12, the method being performed by the computer and further including:

measuring an execution time for the reference process by actually executing the reference process while varying the number of computers in charge and an amount of data processed; and
estimating the estimation model expression by performing a regression analysis using plural combination data of the number of computers in charge, the amount of data processed, and the execution time for the reference process.

(Supplemental Note 14) The method of managing distributed processing according to Supplemental Note 13, the method being performed by the computer and further including:

applying the regression analysis to plural estimation model expressions for estimating the processing time for the reference process; and
evaluating the plural estimation model expressions using an information criterion on the basis of a result of the regression analysis to each of the estimation model expressions, thereby selecting one estimation model expression from the plural estimation model expressions, in which
the selecting the distributed-execution pattern includes acquiring the selected estimation model expression.

(Supplemental Note 15) The method of managing distributed processing according to any one of Supplemental Notes 10 to 14, in which
the plural phases further include a Setup phase in which an initialization process for a later phase is performed,
the method performed by the computer further includes:

measuring a processing time for the Setup phase per process by causing at least one computer of the plural computers to execute one of the plural processes,

the selecting the distributed-execution pattern includes:

acquiring the number of processes per computer corresponding to each of the distributed-execution patterns;
multiplying the processing time for the Setup phase per process by the number of processes per computer to estimate an estimation expression for the processing time for the Setup phase; and
estimating the total execution time using an estimation expression that depends on each of the distributed-execution patterns and is obtained by further combining the estimation expression for the processing time for the Setup phase with the estimation expression for the processing time for the Map phase and the estimation expression for the processing time for the Reduce phase.

(Supplemental Note 16) The method of managing distributed processing according to any one of Supplemental Notes 9 to 15, the method being performed by the computer and further including:

assigning a parameter to each group on the basis of the grouping mode indicated by the selected distributed-execution pattern, and
instructing each group to execute the plural processes in a distributed manner.

(Supplemental Note 17) A program that causes a computer to realize:

a selecting unit that estimates a total execution time on the basis of each of distributed-execution patterns indicating a grouping mode for plural computers and corresponding to the number of computers that are in charge of each of processes having different parameters in

plural phases, this total execution time being necessary for the plural computers to execute the plural processes in a distributed manner, thereby selecting a distributed-execution pattern that makes the total execution time minimal, from among the distributed-execution patterns.

(Supplemental Note 18) The program according to Supplemental Note 17, in which
the plural phases at least include:

a Map phase in which input data used for each of the processes is read, and data obtained by applying a predetermined process to the input data is transmitted to a later phase, and
a Reduce phase in which a predetermined process is applied to the data decomposed in the Map phase, and

the selecting unit estimates the total execution time by using an estimation expression that depends on each of the distributed-execution patterns and is obtained from an estimation expression for a processing time for the Map phase or is obtained by combining the estimation expression for the processing time for the Map phase with an estimation expression for a processing time for the Reduce phase.

(Supplemental Note 19) The program according to Supplemental Note 18 that causes the computer to further realize:

a Map-phase measuring unit that measures a calculation time for the Map phase by causing at least one of the plural computers to execute the Map phase, in which
the selecting unit acquires a time for reading data per computer corresponding to each of the distributed-execution patterns, and the calculation time for the Map phase measured by the Map-phase measuring unit, and uses any one of the acquired times as the processing time for the Map phase included in the total execution time.

(Supplemental Note 20) The program according to Supplemental Note 18 or 19 that causes the computer to further realize:

a Reduce-phase measuring unit that measures a processing time for the Reduce phase per process corresponding to a first distributed-execution pattern of the plural distributed-execution patterns by causing one process of the plural processes to be executed with the first distributed-execution pattern, in which
the selecting unit:

acquires an estimation model expression for estimating, on the basis of an amount of data processed and each of the distributed-execution patterns, a processing time for a reference process serving as a reference for processing of the Reduce phase;
estimates, on the basis of this estimation model expression, the processing time for the reference process corresponding to the first distributed-execution pattern;
corrects this estimation model expression using a ratio between the processing time for the Reduce phase per process corresponding to the first distributed-execution pattern and the processing time for the reference process corresponding to the first distributed-execution pattern, thereby estimating the processing time for the Reduce phase per process corresponding to each of the distributed-execution patterns; and

estimates an execution time for the Reduce phase included in the total execution time using the estimated processing time for the Reduce phase.

(Supplemental Note 21) The program according to Supplemental Note 20 that causes the computer to further realize:

a reference-process measuring unit that measures an execution time for the reference process by actually executing the reference process while varying the number of computers in charge and an amount of data processed, and

a regression analyzing unit that estimates the estimation model expression by performing a regression analysis using plural combination data of the number of computers in charge, the amount of data processed, and the execution time for the reference process, each of which is acquired by the reference-process measuring unit.

(Supplemental Note 22) The program according to Supplemental Note 21 that causes the computer to further realize:

an estimation-model storage unit that stores plural estimation model expressions for estimating the processing time for the reference process; and

an estimation-model selecting unit that evaluates the plural estimation model expressions using an information criterion on the basis of a result of the regression analysis for each of the estimation model expressions by the regression analyzing unit, thereby selecting one estimation model expression from among the plural estimation model expressions, in which

the selecting unit acquires the estimation model expression selected by the estimation-model selecting unit.

(Supplemental Note 23) The program according to any one of Supplemental Notes 18 to 22, in which the plural phases further include a Setup phase in which an initialization process for a later phase is performed, the program causes the computer to further realize:

a Setup-phase measuring unit that measures a processing time for the Setup phase per process by causing at least one computer of the plural computers to execute one of the plural processes,

the selecting unit:

acquires the number of processes per computer corresponding to each of the distributed-execution patterns;

multiplies the processing time for the Setup phase per process by the number of processes per computer to estimate an estimation expression for the processing time for the Setup phase; and

estimates the total execution time using an estimation expression that depends on each of the distributed-execution patterns and is obtained by further combining the estimation expression for the processing time for the Setup phase with the estimation expression for the processing time for the Map phase and the estimation expression for the processing time for the Reduce phase.

(Supplemental Note 24) The program according to any one of Supplemental Notes 17 to 23, causing the computer to further realize:

a distributed-processing execution unit that assigns a parameter to each group on the basis of the grouping mode indicated by the distributed-execution pattern selected by the selecting unit, and instructs each group to execute the plural processes in a distributed manner.

(Supplemental Note 25) A computer-readable storage medium that stores the program according to any one of Supplemental Notes 17 to 24.

The present application claims priority based on Japanese Patent Application No. 2011-177753 filed in Japan on August 15, 2011 and Japanese Patent Application No. 2011-244517 filed in Japan on November 8, 2011, the disclosures of which are incorporated herein by reference in their entirety.

**Claims**

1. A device of managing distributed processing, comprising:

a selecting unit that estimates a total execution time on the basis of each of distributed-execution patterns indicating a grouping mode for plural computers and corresponding to the number of computers that are in charge of each of processes having different parameters in plural phases, the total execution time being necessary for the plural computers to execute the plural processes in a distributed manner, thereby selecting a distributed-execution pattern that makes the total execution time minimal, from among the distributed-execution patterns.

2. The device of managing distributed processing according to claim 1, wherein the plural phases at least include:

a Map phase in which input data used for each of the processes is read, and data obtained by applying a predetermined process to the input data is transmitted to a later phase; and a Reduce phase in which a predetermined process is applied to the data decomposed in the Map phase, and

the selecting unit estimates the total execution time by using an estimation expression that depends on each of the distributed-execution patterns and is obtained from an estimation expression for a processing time for the Map phase or is obtained by combining the estimation expression for the processing time for the Map phase and an estimation expression for a processing time for the Reduce phase.

3. The device of managing distributed processing according to claim 2, further comprising:

a Map-phase measuring unit that measures a calculation time for the Map phase by causing at least one of the plural computers to execute the Map phase, in which the selecting unit acquires a time for reading data per computer corresponding to each of the distributed-execution patterns, and the calculation time for the Map phase measured by the Map-phase measuring unit, and uses any one of the acquired times as the processing time for the Map phase included in the total execution time.

4. The device of managing distributed processing according to claim 2 or 3, further comprising:

a Reduce-phase measuring unit that measures a processing time for the Reduce phase per process corresponding to a first distributed-execution pattern of the plural distributed-execution patterns by causing one of the plural processes to be executed with the first distributed-execution pattern, wherein the selecting unit:

acquires an estimation model expression for estimating, on the basis of an amount of data processed and each of the distributed-execution patterns, a processing time for a reference process serving as a reference for processing of the Reduce phase; estimates, on the basis of this estimation model expression, the processing time for the reference process corresponding to the first distributed-execution pattern; corrects this estimation model expression using a ratio between the processing time for the Reduce phase per process corresponding to the first distributed-execution pattern and the processing time for the reference process corresponding to the first distributed-execution pattern, thereby estimating the processing time for the Reduce phase per process corresponding to each of the distributed-execution patterns; and estimates an execution time for the Reduce phase included in the total execution time using the estimated processing time for the Reduce phase.

5. The device of managing distributed processing according to claim 4, further comprising:

a reference-process measuring unit that measures an execution time for the reference process by actually executing the reference process while varying the number of computers in charge and an amount of data processed; and a regression analyzing unit that estimates the estimation model expression by performing a regression analysis using plural combination data of the number of computers in charge, the amount of data processed, and the execution time for the reference process, each of which is acquired by the reference-process measuring unit.

6. The device of managing distributed processing according to claim 5, further comprising:

an estimation-model storage unit that stores plural estimation model expressions for estimating the processing time for the reference process; and
an estimation-model selecting unit that evaluates the plural estimation model expressions using an information criterion on the basis of a result of the regression analysis to each of the estimation model expressions by the regression analyzing unit, thereby selecting one estimation model expression from among the plural estimation model expressions, wherein
the selecting unit acquires the estimation model expression selected by the estimation-model selecting unit.

7. The device of managing distributed processing according to any one of claims 2 to 6, wherein
the plural phases further include a Setup phase in which an initialization process for a later phase is performed,
the device of managing distributed processing further includes a Setup-phase measuring unit that measures a processing time for the Setup phase per process by causing at least one computer of the plural computers to execute one of the plural processes, and
the selecting unit:

acquires the number of processes per computer corresponding to each of the distributed-execution patterns;
multiplies the processing time for the Setup phase per process by the number of processes per computer to estimate an estimation expression for the processing time for the Setup phase; and
estimates the total execution time using an estimation expression that depends on each of the distributed-execution patterns and is obtained by further combining the estimation expression for the processing time for the Setup phase with the estimation expression for the processing time for the Map phase and the estimation expression for the processing time for the Reduce phase.

8. The device of managing distributed processing according to any one of claims 1 to 7, further comprising
a distributed-processing execution unit that assigns a parameter to each group on the basis of the grouping mode indicated by the distributed-execution pattern selected by the selecting unit, and instructs each group to execute the plural processes in a distributed manner.

9. A method of managing distributed processing, the method being performed by a computer and including:

estimating a total execution time on the basis of each of distributed-execution patterns indicating a grouping mode for plural computers and corresponding to the number of computers that are in charge of each of processes having different parameters in plural phases, this total execution time being necessary for the plural computers to execute the plural processes in a distributed manner, thereby selecting a distributed-execution pattern that makes the total execution time minimal, from among the distributed-execution patterns.

10. A program that causes a computer to realize:

a selecting unit that estimates a total execution time on the basis of each of distributed-execution patterns indicating a grouping mode for plural computers and corresponding to the number of computers that are in charge of each of processes having different parameters in plural phases, this total execution time being necessary for the plural computers to execute the plural processes in a distributed manner, thereby selecting a distributed-execution pattern that makes the total execution time minimal, from among the distributed-execution patterns.

# FIG. 1

```
                        ⌇10
┌──────────────────────────────────┐
│         MASTER DEVICE            │
│       (DEVICE OF MANAGING        │
│     DISTRIBUTED PROCESSING)      │
│                                  │
│  12⌇   ┌──────┐    ┌──────┐      │
│        │ RAM  │    │ CPU  │ ~11  │
│        └──────┘    └──────┘      │
│                         ⌇15      │
│     ┌────┐   ┌──────────────┐    │
│  13~│HDD │   │ INPUT-OUTPUT │    │
│     └────┘   │  INTERFACE   │~14 │
│              └──────────────┘    │
└──────────────────────────────────┘
```

⌇1

⌇5

```
 ⌇20(#1)                    ⌇20(#2)              ⌇20(#n)
┌─────────────────────┐  ┌──────────────┐    ┌──────────────┐
│    SLAVE DEVICE     │  │ SLAVE DEVICE │    │ SLAVE DEVICE │
│                     │  │              │    │              │
│ ┌─────┐   ┌─────┐   │  │              │    │              │
│ │ RAM │   │ CPU │   │  │              │    │              │
│ └─────┘   └─────┘   │  │              │ •••• │             │
│                     │  │              │    │              │
│ ┌───────────┐ ┌───┐ │  │              │    │              │
│ │INPUT-OUTPUT│ │HDD│ │  │              │    │              │
│ │ INTERFACE │ └───┘ │  │              │    │              │
│ └───────────┘       │  │              │    │              │
└─────────────────────┘  └──────────────┘    └──────────────┘
```

22

FIG. 2

MASTER DEVICE
(DEVICE OF MANAGING DISTRIBUTED PROCESSING)

101 DISTRIBUTED-PROGRAM EXECUTION UNIT

109 PATTERN SELECTING UNIT

105 REFERENCE-REDUCE MEASURING UNIT

102 USER-MAP MEASURING UNIT

107 DATA STORAGE UNIT

106 REGRESSION ANALYZING UNIT

103 USER-SETUP MEASURING UNIT

104 USER-REDUCE MEASURING UNIT

108 CLUSTER-PROFILE READING UNIT

10

## FIG. 3

| | A | B | C | D | E | F |
|---|---|---|---|---|---|---|
| DATA SIZE THAT ONE MACHINE IS IN CHARGE OF | 2GB | 4GB | 8GB | 10GB | 20GB | 40GB |
| NUMBER OF PROCESSES THAT ONE MACHINE IS IN CHARGE OF | 40 | 20 | 10 | 8 | 4 | 2 |
| AMOUNT OF MAP CALCULATION | 80 | 80 | 80 | 80 | 80 | 80 |

CALCULATION INTENSIVENESS ⟵          ⟶ DATA INTENSIVENESS

# FIG. 4

PROCESSING TIME FOR USER MAP

$t_M$

1

$P_{CD}$

NUMBER OF MACHINES PER GROUP

TIME REQUIRED ONLY FOR DATA PROCESSING OF MAP PHASE (TIME FOR CALCULATION OF USER MAP)

FIG. 5A

# FIG. 5B

FIG. 6

FIG. 7

PROCESSING
TIME FOR
USER SETUP

NUMBER OF
MACHINES
PER GROUP

1

FIG. 8

FIG. 9

START

ACQUIRE INFORMATION ON DISTRIBUTED
PROGRAM TO BE EXECUTED — S90

CHECK CALCULATION TIME ($t_M$) FOR USER MAP,
PROCESSING TIME ($t_S$) FOR USER SETUP, AND
PROCESSING TIME ($t_R$) FOR USER REDUCE — S91

HAVE DATA ALREADY
BEEN STORED? — S92
YES
NO

MEASURE AND STORE $t_M$, $t_S$, AND $t_R$ — S93

CHECK INFORMATION ON CLUSTER — S94

HAS INFORMATION
ALREADY BEEN STORED? — S95
YES
NO

READ CLUSTER PROFILE AND STORE
INFORMATION ON CLUSTER — S96

HAVE ESTIMATION
MODEL COEFFICIENTS ALREADY
BEEN STORED? — S97
YES
NO

MEASURE PROCESSING TIME
FOR REFERENCE REDUCE — S98

PERFORM REGRESSION ANALYSIS AND STORE
ESTIMATION MODEL COEFFICIENTS — S99

ESTIMATE TOTAL EXECUTION TIME AND SELECT
DISTRIBUTED EXECUTION PATTERN — S100

EXECUTE DISTRIBUTED PROGRAM WITH SELECTED
DISTRIBUTED EXECUTION PATTERN — S101

END

# FIG. 10

MASTER DEVICE
(DEVICE OF MANAGING DISTRIBUTED PROCESSING)

101 — DISTRIBUTED-PROGRAM EXECUTION UNIT

109 — PATTERN SELECTING UNIT

102 — USER-MAP MEASURING UNIT

103 — USER-SETUP MEASURING UNIT

104 — USER-REDUCE MEASURING UNIT

107 — DATA STORAGE UNIT

110 — ESTIMATION-MODEL STORAGE UNIT

105 — REFERENCE-REDUCE MEASURING UNIT

106 — REGRESSION ANALYZING UNIT

111 — MODEL SELECTING UNIT

108 — CLUSTER-PROFILE READING UNIT

10

## FIG. 11

```
                    START

ACQUIRE INFORMATION ON DISTRIBUTED          S90
        PROGRAM TO BE EXECUTED

CHECK CALCULATION TIME ( t_M ) FOR USER MAP,   S91
 PROCESSING TIME ( t_S ) FOR USER SETUP,
AND PROCESSING TIME ( t_R ) FOR USER REDUCE

         HAVE DATA ALREADY                   S92
           BEEN STORED?              YES
              NO

     MEASURE AND STORE t_M, t_S, AND t_R      S93

        CHECK INFORMATION ON CLUSTER          S94

         HAS INFORMATION                      S95
        ALREADY BEEN STORED?        YES
              NO

     READ CLUSTER PROFILE AND STORE           S96
        INFORMATION ON CLUSTER

         HAVE ESTIMATION                      S97
         MODEL COEFFICIENTS
        ALREADY BEEN STORED?        YES
              NO

      MEASURE PROCESSING TIME FOR             S98
          REFERENCE REDUCE

 PERFORM REGRESSION ANALYSIS AND STORE        S99
     ESTIMATION MODEL COEFFICIENTS

    SELECT ESTIMATION MODEL EXPRESSION        S110

 ESTIMATE TOTAL EXECUTION TIME AND SELECT     S100
     DISTRIBUTED EXECUTION PATTERN

    EXECUTE DISTRIBUTED PROGRAM WITH          S101
 SELECTED DISTRIBUTED EXECUTION PATTERN

                    END
```

## INTERNATIONAL SEARCH REPORT

International application No.

PCT/JP2012/005163

### A. CLASSIFICATION OF SUBJECT MATTER
*G06F9/50*(2006.01)i

According to International Patent Classification (IPC) or to both national classification and IPC

### B. FIELDS SEARCHED

Minimum documentation searched (classification system followed by classification symbols)
G06F9/50

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2010-218307 A (Hitachi, Ltd.), 30 September 2010 (30.09.2010), abstract (Family: none) | 1,9,10 |
| Y | JP 2002-244891 A (Hewlett-Packard Co.), 30 August 2002 (30.08.2002), paragraphs [0016], [0017]; fig. 1(B) & US 2002/0103624 A1 | 1,9,10 |
| P,A | Hiroshi Tamano, Shinji Nakadai and Takuya Araki, Optimizing Multiple Machine Learning Jobs on MapReduce, 2011 IEEE Third International Conference on Cloud Computing Technology and Science(CloudCom), 2011.12.01, pp.59-66 | 1-10 |

[X] Further documents are listed in the continuation of Box C.　　[ ] See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 30 August, 2012 (30.08.12) | 11 September, 2012 (11.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/005163

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-79622 A  (Hitachi, Ltd.),<br>08 April 2010 (08.04.2010),<br>abstract<br>(Family: none) | 1-10 |
| A | Naoyuki KAKUTA, Issei YOSHIDA, Naoto KATSUMATA,<br>Tsutomu IBI, MapReduce&Hadoop Jiyu Jizai:<br>Yahoo!JAPAN ni Miru Kaihatsu no Hint, Gekkan<br>ASCII.technologies, 24 November 2010 (24.11.<br>2010), vol.16, no.1(whole no.177), pages 58 to<br>59 | 1-10 |
| A | JP 11-39271 A  (Toshiba Corp.),<br>12 February 1999 (12.02.1999),<br>abstract<br>(Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11259433 B
- JP 2011177753 A
- JP 2011244517 A

**Non-patent literature cited in the description**

- **YOSHIFUMI FUKUMOTO ; MAKOTO ONIZUKA.** Optimization for Multiple Analysis Jobs on MapReduce. *DEIM Forum,* 2011, C3-4